# EUROPEAN PATENT APPLICATION

(11) **EP 1 892 937 A1**
(43) Date of publication of application: **27.02.2008**
(21) Application number: 06747761.2
(22) Date of filing: 20.04.2006
(51) Int. Cl.: H04M 3/42

(54) **SUBSCRIBER CALLING METHOD (VARIANTS) AND A COMMUNICATIONS DEVICE SYSTEM FOR CARRYING OUT SAID METHOD**

(30) Priority: 21.04.2005 RU 2005111738
(71) Applicant: Rakushin, Alexander Stepanovich, Nizhegorodskaya obl. 607220 (RU); Molodchenko, Nikolay Alekseevich, Kharkov 61085 (UA)
(72) Inventor: RAKUSHIN, Alexander Stepanovich, Nizhegorodskaya obl., 607220 (RU)
(74) Representative: Motsch, Andreas
(86) International application number: PCT/RU2006/000202
(87) International publication number: WO 2006/112758

(57) **Abstract**

The invention can be used for designing a multi-purpose telephone unit for accessing to any communications and data transmission systems without limiting the system numbering capacity and with a free selection of a user's identification. In both variants, the inventive method consists in forming a message about a called subscriber on a (secondary) terminal, in transmitting it to another (primary) terminal, which has an identification tag in a telephone network, via a wireless telecommunication channel and, afterwards, in transmitting to the telephone network, wherein said message and the identification tag of the primary terminal from which it is received are stored. In the telephone network, the identification tags of the corresponding primary terminals are determined according to comparison results of information received from both calling and called subscribers, and a communication channel is established between said subscribers. The inventive system of communications devices comprises the telephone network provided with control equipment and the secondary and primary terminals on the calling and called subscribers. The secondary terminal comprises a control and information input and output unit, a conversion unit and a signal receiving transmitting unit using the wireless channel, the primary terminal comprises a signal receiving-transmitting unit using the wireless channel, a conversion unit and a network terminal which is connected via the communication channel to the control equipment of the telephone network which has individual or common with sad communication channel identification tag.

## Description

### FIELD OF THE INVENTION

The invention refers to the field of telephony and can be used for designing a multi-purpose telephone unit for accessing to any communications and data transmission systems without limiting the system numbering capacity and with a free selection of a user's identification.

### BACKGROUND OF THE INVENTION

There are a known the subscriber calling method and communication devices system (RU 2118062 C1, 04.08.1997) that contains many general phone sets; telephone network of general use for receiving and transferring of specified packet data; great number of radiophones and base stations of general use; at that each of these stations is assigned to a specified coverage area and each of these stations controls digital radiophone, which is located in coverage area of the station; great number of local control units which are connected to appropriate base stations of general use; at that a local control unit stores information about base stations of general use in its coverage area; and central control unit which stores information about radiophones; at that telephone network of general use incoming call service requests central control unit defines appropriate radiophone, operates with a local control unit by means of network of general use and provides radiophone with incoming call service.

Disadvantages of subscriber calling method and communication devices system which are currently in use consist in impossibility of making subscriber call when exact location of communication terminal device with definite identifier is unknown. Radio transmitter of subscriber's terminal device must work in radiation mode with high periodicity both during communication session and all other time (for positioning), this appears to be rather dangerous to subscriber. Personal terminal devices connected by radio channel with telephone network usually meant for working only with a definite telephone network type in technical level which is currently in use.

There are also known variants of subscriber calling method (RU 2257681, 27.07.2005 bul. N°21). based on that at first telephone network communication channel is established on called (or calling) subscriber's terminal device; a message about called subscriber is formed, signal of a formed message is transmitted to telephone network where the signal is stored; a phone number from which the message was received is identified and stored; the connection between telephone network and called (or calling) subscriber's terminal device is closed. Then telephone network communication channel is established on calling (or called) subscriber's terminal device; a message about called subscriber is formed; signal of a formed message is transmitted to telephone network where the signal from calling (or called) subscriber is compared with the signal previously received from called (or calling) subscriber; if the result is positive the phone number of called (or calling) subscriber's terminal device is identified; telephone network communication channel between called and calling subscribers' terminal devices is established; if the result is negative a message about comparison is formed in telephone network and sent to a terminal device of the calling (or called) subscriber.

The known communication device system contains telephone network and terminal devices for both called and calling sides. This telephone network has a control computer with a converter installation and message decoding device, message signal comparator and data storing device, a device for defining the identifying number of a terminal device and status analysis and establishing communication channel unit. All of these devices are connected to control computer and terminal devices have their own or shared with communication channel identifier and are connected with status analysis and establishing telephone network communication channel unit.

In subscriber calling method and communication device system for carrying out said method which is currently in use calls are personal only for telephone network subscribers and it doesn't concern terminal device which subscriber use for making or receiving call. A terminal device is bound to telephone network with an identifier (phone number) in the method (prototype) which is currently in use.

### DESCRIPTION OF THE INVENTION

Essence of subscriber calling method (one variant) is in that at fist message about called subscriber and called subscriber identifier are formed on called subscriber side; message signal is stored and identifier of device from which the message was received is defined and stored in telephone network; communication channel between telephone network and this device is cleared out; then a message about called subscriber and calling subscriber identifier is formed on calling subscriber side; message signal of calling subscriber is compared with previously stored signal about called subscriber and if the result is positive an identifier of device of calling subscriber is defined and communication channel between subscribers is established; if the result is negative a message about results of comparison is formed and transmitted to device of calling subscriber; at that at first message about called subscriber and his identifier forming is performed in one (secondary) terminal; message signal is converted into compatible with wireless transmission; wireless communication channel is established with another (primary) terminal which has its own or shared with communication channel identifier; communication channel with telephone network is established; converted signal is transmitted to another (primary) terminal of telephone network; in this device the received signal is converted into compatible with communication channel with telephone network and converted message signal about called subscriber is transmitted to telephone network; and after establishing communication channel between subscribers communication channel with primary terminal of telephone network is established and then communication channel between primary and secondary terminals is established.

Essence of subscriber calling method (another variant) is in that at first a message about called subscriber and his identifier are formed on calling subscriber side; message signal is stored in telephone network; identifier of device from which the message was received is defined and stored; communication channel between this device and telephone network is released; then a message about called subscriber and his identifier are formed on the side of called subscriber; message signal from called subscriber is compared with previously stored signal about called subscriber in telephone network; if the result is positive identifier of device on calling subscriber side is defined and communication channel is established between subscribers; if the result is negative a message about results of comparison is formed in telephone network and transmitted to called subscriber device; at that at first a message about called subscriber and his identifier forming perform in one (secondary) terminal; message signal is converted in this device into compatible with wireless transmitting; wireless communication channel is established with another (primary) terminal which has its own or shared with communication channel identifier; communication channel is established with telephone network; converted message signal is transmitted to another (primary) terminal of telephone network; received signal is converted in this device into compatible with communication channel and converted message signal about called subscriber is transmitted to telephone network; and during establishing communication channel between subscribers, at first communication channel is established with primary terminal of telephone network, and then communication channel between primary and secondary terminals is established.

Using of both applied personal subscriber calling methods provides following technical results.

First result: Creation of technical conditions for using any subscriber's hardware as a terminal which will have no influence on the system numbering capacity, that is without registration and acquiring of an identifier for definite type of communication system or definite belonging. 'Subscriber's hardware' here is a mobile phone or computer, fax, camera or any other hardware with a secondary terminal.

In the applied invention message about called subscriber forming is made in a secondary terminal, but it is transferred into telephone network by another (primary) terminal which has its own identifier in the telephone network. In this case secondary terminal doesn't need identifier as telephone network performs all operations and connections which are needed for subscriber calling using identifiers of primary devices, a certain fixation algorithm and comparing of messages about called subscriber with subscriber's identifier. Identifiers of primary devices can be assigned using intrasystem rules which are not connected with identification of subscribers of primary terminals of other communication systems.

Second result: Creation of technical conditions for making arbitrary choice of secondary terminal addressing type, number of certain addresses, their using and changing time by the subscriber. A message about called subscriber formed in a certain secondary terminal serves as a name of this user's and his secondary terminal address. This message and its function for secondary terminal isn't connected with a certain telephone network structure and its primary terminals numeration, therefore message type selection (address - name), number of messages and their using and changing time choice is free.

Third result: Secondary (subscriber's) terminal is personal and mobile against all types of communication including wireline telephone networks.

A message about called subscriber formed in a certain secondary terminal is transferred to primary terminal using wireless communication channel. State of the art allows organizing of individual wireless communication channels between separate devices on basis of certain system of rules (protocols), their interaction and appropriate means of technical realization of these protocols which don't require any separate internal or central control hardware participation, e.g. telephone network control hardware.

Fourth result: Universal compatibility of secondary terminal with communication channels of various types without combining operations of this terminal with means of communication channels of different types.

Fifth result: Creation of technical conditions for strict separation of rights of possession, rights of use and rights of communication channel command or corresponding primary terminal or communication channel terminating unit and subscriber's hardware (secondary terminal).

E.g. secondary terminal provides calling and communication session realization via wireline telephone network not being a part of wireline communication system; it has no identifier in the wireline telephone network and belongs to a subscriber. In this case a subscriber which uses communication service has no direct connection with specific wireline communication channel or corresponding primary terminal. One and the same specific wireline communication channel and primary terminal can be used by different subscribers. Similar conditions reached for radio communication terminal units. At the same time possibility of phone fraud due to illegal connection to a wireline communication channel is reduced.

Sixth result: Creation of technical conditions for less health damaging use of personal terminal units with electromagnetic signal transmitters due to possibility of transference of main radiating load used for information signals transferring to telephone network from secondary (subscriber's) terminal to primary (not subscriber's) terminal.

Seventh result: Number of technical means for telephone network coverage area widening is increasing due to possibility of installing additional stationary primary terminals in communication service provider possession. In that case there are no numbering capacity limitations for automatic switching centers because system numbering of primary terminals can be optional. These additional stationary primary terminals can be equipped with minimal amount of technical means used only for providing interaction with secondary terminals in wireline networks and radio communication systems.

Eighth result: Number of technical means for public phones creation is increasing. Practically any primary terminal can function as 'public phone' because it can provide subscribers with communication services for their own costs. Wireless communication channel between primary and secondary terminals doesn't require line of sight. Therefore primary terminals can be used as public phones which will be inaccessible for phone vandals and will cut out unsanitary use of the same handset by different persons.

Ninth result: Creation of technical conditions for increasing of services number in case of communication facilities temporary use (lease, rent). In applied invention primary terminal can simultaneously function as a personal terminal unit which is not assignable by a lessor to other persons and function as a primary terminal for secondary terminals which are temporary or constantly used by third persons. Secondary terminal doesn't require registration and 'number' fixation in certain communication system. In these cases methods of communication facilities rent and methods of communication service payment become more varied and easy for subscribers.

Applied technical results acquisition doesn't depend on the way of wireless communication signal transmission from secondary terminal to primary terminal, e.g. based on Wi-Fi (standards family 802. 11) technology and protocols, Bluetooth technology, infrared signal transmission technology or other. Conversion of a received signal in a primary terminal into compatible with telephone network communication channel type without additional specification of characteristics of this conversion is sufficient for getting applied technical results.

Essence of the invention in articles 2 and 10 of claims consist in that in contrast to personal subscriber calling method in articles 1 and 9 after establishing wireless communication channel with secondary terminal message signal about characteristics and identifier of this device is formed in addition in primary terminal and transmitted to secondary terminal after establishing wireless communication channel with this terminal; after establishing wireless communication channels with primary terminals which are within the reach of establishing connection with telephone network, a message signal about characteristics and identifiers of primary terminals which are accessible for wireless signal transmission is formed in addition in secondary terminal; this message signal is included into message signal about called subscriber; before establishing communication channel between subscribers communication channel with calling subscriber is established in telephone network; a characteristics of possible communication channels between subscribers are defined; a message about characteristics of possible communication channels is formed and transmitted to secondary terminal of calling subscriber; the selection of characteristics of ingoing and/or outgoing communication is made on secondary terminal of calling subscriber; message about selection results is formed; signal of this message is transmitted to telephone network; message signal is received in telephone network; subscriber's choice is identified and after that communication channel between subscribers is established by selection results.

The sum total of attributes of methods in articles 2 and 10 allows calling subscriber in process of calling to make an additional selection of such communication channel between subscribers which will be optimal for communication session in specified calling case when secondary terminal of calling or called subscriber has a possibility to access a telephone network by two or more primary terminals.

Essence of invention in articles 3 and 11 of claims consists in that in contrast to personal subscriber calling method in articles 1 and 9 in addition message signal about called subscriber which was received from secondary terminal is stored in primary terminal and then it is converted and transmitted to telephone network; in telephone network when establishing communication channel between subscribers after establishing communication channel with primary terminal message signal about called subscriber is reproduced and transmitted to the side of called(article 3) or calling (article 11) side.

The sum total of attributes of methods in articles 3 and 11 in case when on called subscriber side two or more secondary terminals have access to a primary terminal allows to establish communication channel with the called subscriber who formed a message about specified called subscriber. A message signal about called subscriber received on primary terminal from telephone network can be used as selection code or identifier of wireless communication channel with the secondary terminal which has previously sent identical signal about called subscriber.

Essence of invention in articles 4 and 12 of claims consists in that in contrast to personal subscriber calling method in articles 1 and 9 additional message about the region of receiving signals from called subscriber is formed on the side of calling subscriber and included to message signal about called subscriber; message signal about region of receiving signals about called subscriber is identified in addition; before comparing message signal from calling (article 4) or called (article 12) subscriber with previously stored signal about called subscriber identifier of device from which message about called subscriber was received is defined in addition and the region of telephone network where the device with this identifier is located; then great number of compared signals is restricted to only those signals which came from telephone network region that was selected by calling subscriber.

The sum total of attributes of methods in articles 4 and 12 allows calling subscriber to restrict call with a specified region of called subscriber location and thereby lower price of call and communication session or restrict contact with this subscriber by his definite location.

Essence of invention in articles 5 and 13 of claims consists in that in contrast to personal subscriber calling method in articles 1 and 9 additional special message about subscriber which establishes communication channel with telephone network is formed in secondary terminal; signal of this message is included into message signal about called subscriber; subscriber's special message signal is compared with this signal which was saved during subscriber's personal bill registration; received message signal about called subscriber is additionally compared with previously stored signals which were saved during his personal bill registration; if the result is positive communication channel with secondary terminal is held for further performing of operations of this method; and if the result is negative communication channel with this subscriber is closed.

In both cases technical result which is reached due to attributes of methods in articles 5 and 13 consists in providing of conditions for identification of settlement account of a calling subscriber in telephone network and estimated probability of subscriber payment for communication services and either for eliminating a possibility of invalid or fabricated message about called subscriber forming by the calling subscriber.

Essence of invention in articles 6 and 14 of claims consists in that in contrast to personal subscriber calling method in articles 1 and 9 in addition a code of service selection is formed in secondary terminal and signal of this message is included in message signal about called subscriber.

In both cases technical result which is reached due to attributes of each method consists in providing of conditions for realization of methods of articles 1 and 9 in up-to-date communication systems and data transferring systems. Operation forming of communication service selection code' leads to formation of a signal which will allow readdressing of current call to hardware which can perform set of operations for methods of articles 1 and 9 after identification of the signal.

Essence of invention in articles 7 and 15 of claims consists in that in contrast to personal subscriber calling method in articles 1 and 9 during establishing communication channel with primary terminal power of signal used for wireless communication is reduced to a certain level in secondary terminal.

In both cases technical result which is reached due to attributes of each method consists in providing of conditions under which a subscriber has a possibility to use personal secondary terminal at safety and/or economical mode. E.g. there are such users as children, expectant mothers, or people for which exposure to transmitter radiation is particularly unwanted.

Essence of invention in articles 8 and 16 of claims consists in that in contrast to personal subscriber calling method in articles 1 and 9 during establishing wireless communication channel with primary terminal, at fist power of wireless transmission signal is changed in certain range in secondary terminal and then signal is transmitted to primary terminal.

In both cases technical result which is reached due to attributes of each method consists in providing of conditions under which a subscriber has a possibility of temporary increase of wireless communication range between primary and secondary terminals ignoring using of uneconomic mode of operation of subscriber's device if it is needed.
Essence of invention in article 17 of claims consists in that in contrast to personal subscriber calling method in article 9 message signal about called subscriber which was received from calling subscriber is additionally converted in telephone network into compatible with general radio channel; the signal is transferred to radio transmitter and reproduced in general radio channel; a message about called subscriber is transmitted from secondary to primary terminal on the side of called subscriber after radio signal receiving in secondary terminal and decoding of signal in received message which coincides with message signal about called subscriber formed in secondary terminal of called subscriber.

The sum total of attributes of current method allows sending a message about call to called subscriber secondary terminal bypassing communication channels of telephone network through radio channel of a general use which covers estimated region of subscriber location if called subscriber hasn't inform readiness to receive a call before the moment when calling subscriber is making a call.

Essence of invention in article 18 of claims consists in that in contrast to personal subscriber calling method in article 17 information message for called subscriber is additionally formed in secondary terminal of calling subscriber; this message is included in message signal about called subscriber; information message signal received from calling subscriber is converted into compatible with general radio channel in telephone network; this signal is transferred to radio transmitter and reproduced in radio channel; information message signal is additionally separated and formed for indication or sound playback in secondary terminal.

The sum total of attributes of current method in the second variant of subscriber calling method allows sending an information message to called subscriber which will include information about calling subscriber in addition to technical result on article 17 method.

Essence of invention in article 19 of claims consists in that system of communication devices for realization of personal subscriber calling method which contains telephone network and at least one (primary) terminal on the calling and called subscribers' side, wherein telephone network contains control computer with message signal conversion and decoding unit; message signal storing and comparing unit; message signal forming and reproducing unit and terminal identifier defining unit; status analysis and establishing communication channel device which is connected to control computer of telephone network; and primary terminal contains at least network terminal which is connected by communication channel to status analysis and establishing communication channel device of telephone network and has its own or shared with communication channel identifier; at that it contains additional another (secondary) terminal on the calling and called subscribers' sides; this device is connected by wireless communication channel to at least one of primary terminals; secondary terminal contains wireless communication channel signal receiving and transmitting unit which is in tandem with signal conversion control unit and information entry and display unit; and primary terminal contains wireless communication channel signal receiving and transmitting unit which is in tandem with signal conversion control unit which is connected to network terminal of primary terminal.

System of devices in article 19 allows performing all types of telephone network personal subscriber calling methods according to articles 1-6 and 9 of claims and getting of applied technical results.

Essence of invention in article 20 of claims consists in that in contrast to personal subscriber calling method in article 19 secondary terminal contains signal power modifying unit used for wireless transmitting which is connected to signal receiving and transmitting unit with wireless communication channel.

System of devices in article 20 allows performing telephone network personal subscriber calling methods according to articles 7-8 and 15-16 of claims and getting of applied technical results.

Essence of invention in article 21 of claims consists in that in contrast to personal subscriber calling method in article 19 telephone network contains signal converting into compatible with general radio channel unit which is connected to control computer; and general radio channel radio transmitter; and secondary terminal contains additional general radio channel signal receiver which is in tandem with signal decoding and message forming unit which is connected to information entry and display control unit.

System of devices in article 21 allows performing telephone network personal subscriber calling methods according to articles 17 and 18 of claims and getting of applied technical results.

### BRIEF DESCRIPTION OF DRAWINGS

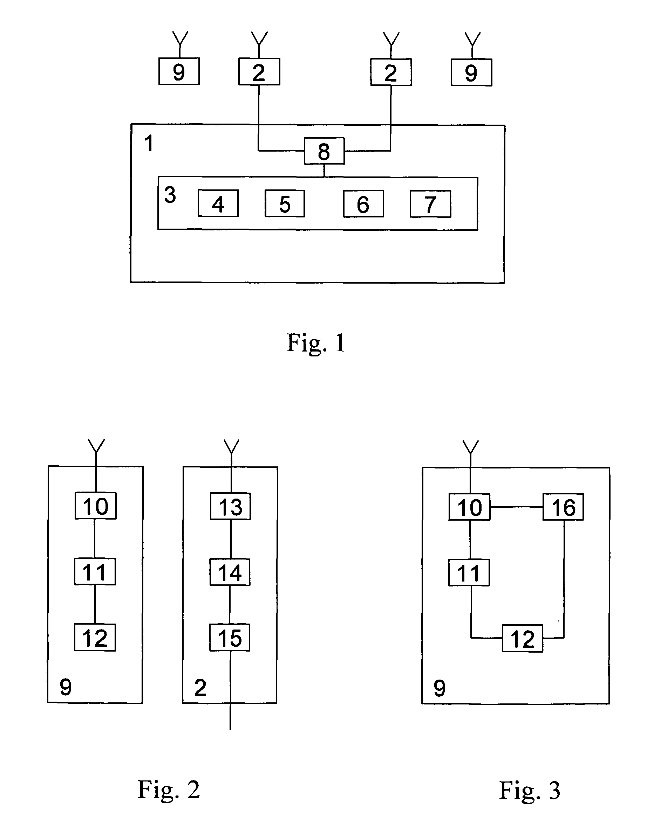

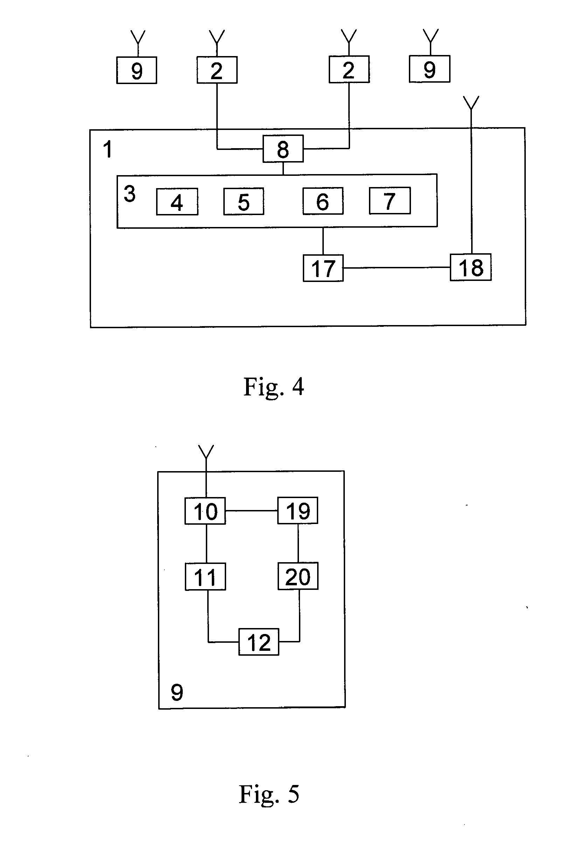

Fig. 1 and 2 show communication device system which realizes the sum total of attributes of telephone network subscriber calling methods in articles 1-6 and 9-14 according to the article 19. Fig. 3 show a secondary terminal with signal power modifying unit for wireless transmitting which is used for the sum total of attributes of telephone network subscriber calling methods realization according to articles 7-8 and 15-16,20 of claims. Fig. 4 and 5 show communication device system which realizes the sum total of operations of telephone network subscriber calling methods in articles 17 and 18 according to article 21 of claims.

### APPLICATIONS OF THE INVENTION

Operations of telephone network subscriber calling methods in articles 1-6 and 9-14 are realized on the ground of technical means shown on fig. 1 and 2.

For realization of applied operations of method article 19 the system of communication devices contains telephone network 1, at least two (primary) terminals 2 on called and calling side; telephone network 1 contains control computer 3 with message signal conversion and decoding unit 4, message signal storing and comparing unit 5, message signal forming and reproducing unit 6 and terminal identifier defining unit 7, status analysis and communication channel establishing device 8 with control computer 3 of telephone network 1; and primary terminal 2 contains at least one network terminal which is connected to status analysis and communication channel establishing device 8 of telephone network 1 and has its own or shared with communication channel identifier; in addition communication device system contains another (secondary) terminal 9 on the side of called and calling subscriber which is connected by wireless communication channel to at least one primary terminal 2; (look at fig. 2) secondary terminal 9 contains wireless communication channel signal reception and transmission unit 10 which is in tandem with signal conversion control unit 11 and information entry and display unit 12; primary terminal 2 contains wireless communication channel signal reception and transmission unit 12 which is in tandem with signal conversion control unit 14 which is connected to network terminal of primary terminal 2.

Telephone network 1 can function as telecommunication system of any type, including data transferring system which provides voice and data transferring by wireline or wireless channels. Telephone network 1 can be a complex of communication device systems or complex of communication device systems and data transferring systems; each of these complexes has separate control equipment.

Message signal conversion and decoding unit 4, message signal storing and comparing unit 5, message signal forming and reproducing unit 6 and terminal identifier defining unit 7 enter into the composition of control computer 3 and perform their name functions.

Status analysis and communication channel establishing device 8 can be any standard telephone network device which performs status analysis and communication channels commutation functions under control computer 3 management.

Primary terminal 2 can be any technical device used for connecting subscriber's terminal unit with communication channel of telephone network which has its own or shared with communication channel identifier within the bounds of this telephone network.

Terminal 9 is subscriber's technical device used for message signal forming, conversion, receiving, transmitting and processing. In contrast to terminal 2 terminal 9 doesn't have an identifier in telephone network or separate wireline or wireless communication channel directly connected to telephone network 1. Description of an invention convenience terminal 2 is called primary terminal and terminal 9 is called secondary terminal.

Fig. 2 shows that terminal 9 contains wireless communication channel signal reception and transmission unit 10, signal conversion control unit 11 and information entry and display unit 12; primary terminal 2 contains wireless communication channel signal reception and transmission unit 13, signal conversion control unit 14 and network terminal 15.

Unit 10 and wireless communication channel signal reception and transmission unit 13 are devices of the same type and perform functions of establishing individual wireless communication channel between terminals, characteristics defining of a device which is connected by wireless communication channel, wireless channel signal receiving and transmitting.

Wireless communication channel between primary and secondary terminal can be radio channel or infrared channel. Realization of listed functions of 10 and 13 units is defined by signal transfer method in wireless channel. E.g. technical level there are two technologies: Bluetooth which can perform listed functions using individual radio channel and Wi-Fi (standard family 802.11) which can perform similar functions using individual radio channel or infrared channel.

Signal conversion control unit 11 of secondary terminal 9 performs transmitting function of signals between information entry and display unit 12 and signal reception and transmission unit 10. Information entry and display unit 12 performs phone functions which are similar to user interaction functions of any phone set or similar to phone functions of built-in communication means of computer or functions of computer periphery or user's digital device like camera. That is why signal conversion control unit 11 can perform signal matching conversion function. Signal conversion control unit 11 perform function which are usually realized by microprocessor unit and doesn't require additional invention.

Functions of wireless communication channel signal reception and transmission unit 13 are similar to applied functions of unit 10 secondary terminal. It is obvious that unit 10 and 13 functioning must be based on the same technology of signal transmitting in wireless channel.

Signal conversion control unit 14 performs functions of signal matching conversion between wireless communication channel signal reception and transmission unit 13 and network terminal 15, therefore for some defined wireless communication channel signal transmitting technology functions of unit 14 and their realization means are defined by type of network terminal.

Network terminal is hardware which provides physical interaction between communication channel and hardware of terminal which has its own or shared with communication channel identifier (number, address) within the bounds of this telephone network

For all types of network terminals signal conversion control unit 14 of primary terminal 2 must perform function of converting signal for transmitting signal from unit 13 (receiving and transmitting signal by wireless communication channel between primary and secondary terminals) to network terminal 15 and from network terminal 15 to unit 13; and function of unit 13 and network terminal 15 electric parameters matching. Function of matching signal conversion in unit 14 includes analog-digital and digital-to-analog conversion, logical signal conversion of digital signals according to corresponding protocols including packet data transmission (e.g. TCP/IP) for digital data transmission. Thus signal conversion control unit 14 functions as microprocessor unit which is able to perform information storing, comparing and processing functions.

State of the art allows synthesizing of any unit which is included in primary or secondary terminal on basis of specified functions. As a rule for technical efficiency increase most functions are synthesized not in separate units but in one integrated circuit of terminal.

For all types of network terminals there are units of signal conversion between network terminal of a specified type and wireless communication channel signal receiving and transmitting unit for establishing connection with secondary terminal. Regardless of existing communication channels' differences and corresponding network terminals universal compatibility is reached between secondary terminal (user's device) and telephone networks of various types. Such compatibility is reached without combining (summing up) all means and operations for establishing communication channels of various types in one terminal 9.

Telephone network 1 combines and interacts (establishes communication channels) only with primary terminals 2; each of them has an identifier (number, address) for telephone network 1. A secondary terminal 9 have no identifier in telephone network 1 and in this meaning doesn't require registration (fixation) in definite telephone network or definite communication service provider.

Message about called subscriber formed in secondary terminal 9 of called subscriber functions as an address of this user and his terminal. This message and its addressing function for secondary terminal 9 aren't connected with the structure of telephone network and its terminals 2 numbering, therefore message type (address - name), message number and their time of use and changing selection is free. This provides creation of technical conditions for subscriber to make free choice of addressing type for his secondary (user's) terminals 9, number of specified addresses, time of their use and changing. Addressing type here is also a variable character of message signal forming.

Wireless nature of interaction with primary terminals 2 allows a subscriber to have secondary terminal 9, providing secondary terminal 9 with technical conditions of personal belonging to definite person when this person is moving against terminals 2 of any centralized telephone network 1.

Primary terminals 2 on the one hand are elements of wireless system of interaction with secondary terminals and on the other hand are elements of centralized telephone network 1. This wireless interaction uses one type units 10 and 13 of signal receiving and transmitting by wireless channel. Therefore regardless of communication channel type, methods of signal transmitting in centralized telephone network 1 and rules of its interaction with primary terminals 2 secondary terminals 9 are mobile against all primary terminals 2 of any types of communication, including wireline telephone networks.

In case of using wireline telephone network connection a subscriber doesn't use direct contact with wireline channel or corresponding network terminal 15. One and the same wireline channel and primary terminal 2 can be used by different subscribers. Said factors create conditions for clear distinction of rules of possession for wireline communication channels together with primary terminals 2 and subscribers' (secondary) terminals 9. At the same time possibility of phone fraud due to illegal connection to a wireline communication channel is reduced.

Less health damaging use of personal terminal units with electromagnetic signal transmitters due to possibility of transference of main radiating load used for information signals transferring to telephone network 1 form secondary (subscriber's) terminal 9 to primary (not subscriber's) terminal 2 of telephone network 1.

Number of technical means for telephone network 1 coverage area widening is increasing due to possibility of installing additional stationary primary terminals 2 in communication service provider possession.

Number of technical means for public phones creation is increasing. Practically any primary terminal 2 can function as 'public phone' because it can provide subscribers with communication services for their own costs. Wireless communication channel between secondary 9 and primary 2 terminals doesn't require line of sight. Therefore primary terminals 2 can be used as public phones which will be inaccessible for phone vandals and will cut out unsanitary use of the same handset by different persons.

Technical conditions for increasing of services assortment in case of communication facilities temporary use (lease, rent) are created. Primary terminal 2 can simultaneously function as a personal terminal unit which is not assignable by a lessor to other persons and function as a primary terminal 2 for secondary terminals 9 which are temporary or constantly used by strangers. In any cases secondary terminal 9 doesn't require registration and 'number' fixation in certain communication system. In these cases methods of communication facilities rent and methods of communication service payment become more varied and easy for subscribers.

Methods, technologies and specified characteristics types of wireless communication channel establishing between secondary and primary terminals are unimportant for getting applied technical results. It is considerable that state of the art allows establishing of individual wireless communication channel between two terminals and message signal transmission though this channel.

References on specified technologies and devices are oriented on illustration of applied invention. Within the bounds of articles of invention formula any technical means which can perform functions of the invention formula attributes and allow accessing of necessary results can be applied.

### TECHNICAL APPLICABILITY

In first variant of personal calling method a message about called subscriber and his identifier are formed in secondary terminal 9 at first. In unit 11 of secondary terminal 9 formed message signal and subscribers' identifier are converted into compatible with wireless channel. Within the covering range of wireless communication a communication channel to signal reception and transmission unit 13 of primary terminal 2 is established through signal reception and transmission unit 10; primary terminal has its own or shared with communication channel identifier.

Establishing of communication channel with telephone network is made on basis of standard procedures accepted for specified network terminal 15; a command for establishing a communication channel with telephone network is formed in information entry and display unit 12 of secondary terminal 9 and transmitted to primary terminal 2. In signal conversion control unit 14 of primary terminal 2 resistance in communication channel input is changed in case if network terminal is for instance 'copper pair'; it imitates subscriber's answer for a call. In this case control computer 3 of telephone network 1 gives a command for transmission of connection establishing signal and switches to received messages analysis mode when a signal from channel status analysis device (standard device for specified automatic switching center type) 8 is received. Not only tone burst can be used as a signal of connection establishing but also a message from message signal forming and reproducing unit 6.

Establishing of communication channel with telephone network in case of using network terminal 15 for digital packet data transferring realizes in standard operation of packet data transferring; data contains packet communication control information.

After establishing communication channel converted message signal about called subscriber and his identifier is transmitted from secondary terminal 9 to primary terminal 2, converted in unit 14 of this device into compatible with transferring through communication channel with telephone network 1 and message signal is transmitted through network terminal 15 to telephone network 1.

After receiving a signal through channel status analysis device 8 and establishing communication channels in telephone network 1 an identifier of a subscriber from which message signal was received is defined in unit 4 of control computer 3; and received signal is stored as a message from called subscriber in storing and comparing unit 5 of control computer 3; identifier of terminal 2 from which the message was received is defined in identifier defining unit 7 and stored in control computer 3; and communication channels between telephone network and the terminal are cleared out.

Then a message signal about called subscriber and calling subscriber identifier are formed in secondary terminal 9. Formed message and identifier signals are converted into compatible with wireless channel transferring in unit 11 of secondary terminal 9 of calling subscriber. Communication channel is established with information receiving and transferring unit 13 of primary terminal 2 of calling subscriber within the covering range of wireless communication through signal receiving and transferring unit 10; primary terminal has its own or shared with communication channel identifier.

Communication channel with telephone network is established, and converted message signal about called subscriber and subscriber's identifier is transferred to primary terminal 2, converted in unit 14 of this device into compatible for transferring through communication channel with telephone network and message signal is transferred through network terminal 15 into telephone network 1.

In telephone network 1 after receiving signal through communication channel establishing status analysis device 8 in unit 4 of control computer 3 identifier of subscriber from which the message signal was received is defined; in storing and comparing unit 5 of control computer 3 received signal from calling subscriber is compared with previously stored message signal about called subscriber. If the result is negative a message about results of comparison is formed in signals forming and reproducing unit 6 and transferred to secondary terminal 9 of calling subscriber.

If the result is positive an identifier of primary terminal 2 on side of called subscriber is defined in identifier defining unit 7; communication channel with primary terminal 2 on side of called subscriber is established through device 8; communication channel between primary 2 and secondary 9 terminals is established on side of called subscriber; then communication channel between secondary terminals of calling and called subscribers is established.

In second variant of telephone network subscriber personal calling method (article 9 of formula of invention) when a called subscriber forms a message about readiness of receiving a call on his secondary terminal after calling subscriber make a personal call the unit 16 correspond to electrical parameters regulator of signal receiving unit 10 which is controlled by subscriber from control unit 12 of secondary terminal 9.

Operations of telephone network subscriber calling methods in articles 17-18 are realized by technical means shown on fig. 4 and 5 and in compliance with algorithms applied in articles 17-18.

By article 21 system of communication devices in addition contains in telephone network 1 signal converting into compatible with general radio channel unit 17 which is connected to control computer 3 and a radio transmitter 18 of general radio channel; and secondary terminal 9 in addition contains general radio channel signal receiver 19 in tandem with decoding and message forming unit 20 which is connected to information entry and display unit 12.

Methods, technologies and specified characteristics types of signal transmission establishing by general radio channel are unimportant for getting applied technical results. It is considerable that state of the art allows establishing message signal transmission through general radio channel which will be accepted as address in secondary terminal of called subscriber. Within the bounds of articles of claims any technical means which can perform functions of the invention formula attributes and allow accessing of necessary results can be applied sequence of operations and their realization place is changing, but technical means of their realization and results that can be reached are analogous.

Operations of telephone network subscriber calling methods in articles 2-6 and 10-14 performed by technical means shown on fig. 1 and 2. Additional functions isn't shown on fig. 1 and 2 as separate units as they are connected with realization of programmed logic operations in control computer 3 and corresponding microprocessor units of primary and secondary terminals. In case of using technologies of wireless communication which are currently in use (e.g. Bluetooth) in primary and secondary terminals the operation of defining characteristics of device and services this device can give is performed automatically by all devices on their mutual detection within the reach of radio signal.

Operations of telephone network subscriber calling methods in articles 7-8 and 15-16 performed by technical means shown on fig. 1 and 3. In compliance with article 20 signal power modifying unit 16 for wireless transmitting is additionally included in secondary terminal under article 19; the unit is connected to signal receiving and transmitting unit 10 and control unit 12 of secondary terminal 9. Signal power modifying

## Claims

1. Telephone network personal subscriber calling method is based on: at fist message about called subscriber and called subscriber identifier are formed on called subscriber side; message signal is stored and identifier of device from which the message was received is defined and stored in telephone network; communication channel between telephone network and this device is cleared out; then a message about called subscriber and calling subscriber identifier is formed on calling subscriber side; message signal of calling subscriber is compared with previously stored signal about called subscriber and if the result is positive an identifier of device of calling subscriber is defined and communication channel between subscribers is established; if the result is negative a message about results of comparison is formed and transmitted to device of calling subscriber; the method has differences: at first message about called subscriber and his identifier forming is performed in one (secondary) terminal; message signal is converted into compatible with wireless transmission; wireless communication channel is established with another (primary) terminal which has its own or shared with communication channel identifier; communication channel with telephone network is established; converted signal is transmitted to another (primary) terminal of telephone network; in this device the received signal is converted into compatible with communication channel with telephone network and converted message signal about called subscriber is transmitted to telephone network; and after establishing communication channel between subscribers communication channel with primary terminal of telephone network is established and then communication channel between primary and secondary terminals is established.

2. The method of claim 1, wherein after establishing wireless communication channel with secondary terminal message signal about characteristics and identifier of this device is formed in addition in primary terminal and transmitted to secondary terminal after establishing wireless communication channel with this terminal; after establishing wireless communication channels with primary terminals, which are within the reach of establishing connection with telephone network, a message signal about characteristics and identifiers of primary terminals which are accessible for wireless signal transmission is formed in addition in secondary terminal; this message signal is included into message signal about called subscriber; before establishing communication channel between subscribers communication channel with calling subscriber is established in telephone network; a characteristics of possible communication channels between subscribers are defined; a message about characteristics of possible communication channels is formed and transmitted to secondary terminal of calling subscriber; the selection of characteristics of ingoing and/or outgoing communication is made on secondary terminal of calling subscriber; message about selection results is formed; signal of this message is transmitted to telephone network; message signal is received in telephone network; subscriber's choice is identified and after that communication channel between subscribers is established by selection results.

3. The method of claim 1, wherein in addition message signal about called subscriber which was received from secondary terminal is stored in primary terminal and then it is converted and transmitted to telephone network; in telephone network when establishing communication channel between subscribers after establishing communication channel with primary terminal message signal about called subscriber is reproduced and transmitted to the side of called subscriber.

4. The method of claim 1, wherein additional message about the region of receiving signals from called subscriber is formed on the side of calling subscriber and included to message signal about called subscriber; message signal about region of receiving signals about called subscriber is identified in addition; before comparing message signal from calling subscriber with previously stored signal about called subscriber identifier of device from which message about called subscriber was received is defined in addition and the region of telephone network where the device with this identifier is located; then great number of compared signals is restricted to only those signals which came from telephone network region that was selected by calling subscriber.

5. The method of claim 1, wherein additional special message about subscriber which establishes communication channel with telephone network is formed in secondary terminal; signal of this message is included into message signal about called subscriber; subscriber's special message signal is compared with this signal which was saved during subscriber's personal bill registration; received message signal about called subscriber is additionally compared with previously stored signals which were saved during his personal bill registration; if the result is positive communication channel with secondary terminal is held for further performing of operations of this method; and if the result is negative communication channel with this subscriber is closed.

6. The method of claim 1, wherein in addition a code of service selection is formed in secondary terminal and signal of this message is included in message signal about called subscriber.

7. The method of claim 1, wherein during establishing communication channel with primary terminal power of signal used for wireless communication is reduced to a certain level in secondary terminal.

8. The method of claim 1, wherein during establishing wireless communication channel with primary terminal, at fist power of wireless transmission signal is changed in certain range in secondary terminal and then signal is transmitted to primary terminal.

9. Telephone network personal subscriber calling method is based on: at first a message about called subscriber and his identifier are formed on calling subscriber side; message signal is stored in telephone network; identifier of device from which the message was received is defined and stored; communication channel between this device and telephone network is released; then a message about called subscriber and his identifier are formed on the side of called subscriber; message signal from called subscriber is compared with previously stored signal about called subscriber in telephone network; if the result is positive identifier of device on calling subscriber side is defined and communication channel is established between subscribers; if the result is negative a message about results of comparison is formed in telephone network and transmitted to called subscriber device; the method has differences: at first a message about called subscriber and his identifier forming perform in one (secondary) terminal; message signal is converted in this device into compatible with wireless transmitting; wireless communication channel is established with another (primary) terminal which has its own or shared with communication channel identifier; communication channel is established with telephone network; converted message signal is transmitted to another (primary) terminal of telephone network; received signal is converted in this device into compatible with communication channel and converted message signal about called subscriber is transmitted to telephone network; and during establishing communication channel between subscribers, at first communication channel is established with primary terminal of telephone network, and then communication channel between primary and secondary terminals is established.

10. The method of claim 9, wherein after establishing wireless communication channel with secondary terminal message signal about characteristics and identifier of this device is formed in addition in primary terminal and transmitted to secondary terminal after establishing wireless communication channel with this terminal; after establishing wireless communication channels with primary terminals, which are within the reach of establishing connection with telephone network, a message signal about characteristics and identifiers of primary terminals which are accessible for wireless signal transmission is formed in addition in secondary terminal; this message signal is included into message signal about called subscriber; before establishing communication channel between subscribers communication channel with calling subscriber is established in telephone network; a characteristics of possible communication channels between subscribers are defined; a message about characteristics of possible communication channels is formed and transmitted to secondary terminal of calling subscriber; the selection of characteristics of ingoing and/or outgoing communication is made on secondary terminal of calling subscriber; message about selection results is formed; signal of this message is transmitted to telephone network; message signal is received in telephone network; subscriber's choice is identified and after that communication channel between subscribers is established by selection results.

11. The method of claim 9, wherein in addition message signal about called subscriber which was received from secondary terminal is stored in primary terminal and then it is converted and transmitted to telephone network; in telephone network when establishing communication channel between subscribers after establishing communication channel with primary terminal message signal about called subscriber is reproduced and transmitted to the side of calling subscriber.

12. The method of claim 9, wherein additional message about the region of receiving signals from called subscriber is formed on the side of calling subscriber and included to message signal about called subscriber; in telephone network message signal about region of receiving signals about called subscriber is identified in addition; before comparing message signal from called subscriber with previously stored signal about called subscriber identifier of device from which message about called subscriber was received is defined in addition and the region of telephone network where the device with this identifier is located; then great number of compared signals is restricted to only those signals which came from telephone network region that was selected by calling subscriber.

13. The method of claim 9, wherein additional special message about subscriber which establishes communication channel with telephone network is formed in secondary terminal; signal of this message is included into message signal about called subscriber; subscriber's special message signal is compared with this signal which was saved during subscriber's personal bill registration; received message signal about called subscriber is additionally compared with previously stored signals which were saved during his personal bill registration; if the result is positive communication channel with secondary terminal is held for further performing of operations of this method; and if the result is negative communication channel with this subscriber is closed.

14. The method of claim 9, wherein in addition a code of service selection is formed in secondary terminal and signal of this message is included in message signal about called subscriber.

15. The method of claim 9, wherein during establishing communication channel with primary terminal power of signal used for wireless communication is reduced to a certain level in secondary terminal.

16. The method of claim 9, wherein during establishing wireless communication channel with primary terminal, at fist power of wireless transmission signal is changed in certain range in secondary terminal and then signal is transmitted to primary terminal.

17. The method of claim 9, wherein message signal about called subscriber which was received from calling subscriber is additionally converted in telephone network into compatible with general radio channel; the signal is transferred to radio transmitter and reproduced in general radio channel; a message about called subscriber is transmitted from secondary to primary terminal on the side of called subscriber after radio signal receiving in secondary terminal and decoding of signal in received message which coincides with message signal about called subscriber formed in secondary terminal of called subscriber.

18. The method of claim 9, wherein information message for called subscriber is additionally formed in secondary terminal of calling subscriber; this message is included in message signal about called subscriber; information message signal received from calling subscriber is converted into compatible with general radio channel in telephone network; this signal is transferred to radio transmitter and reproduced in radio channel; information message signal is additionally separated and formed for indication or sound playback in secondary terminal.

19. System of communication devices for realization of personal subscriber calling method which contains telephone network and at least one (primary) terminal on the calling and called subscribers' side, wherein telephone network contains control computer with message signal conversion and decoding unit; message signal storing and comparing unit; message signal forming and reproducing unit and terminal identifier defining unit; status analysis and establishing communication channel device which is connected to control computer of telephone network; and primary terminal contains at least network terminal which is connected by communication channel to status analysis and establishing communication channel device of telephone network and has its own or shared with communication channel identifier; the system has differences: it contains additional another (secondary) terminal on the calling and called subscribers' sides; this device is connected by wireless communication channel to at least one of primary terminals; secondary terminal contains wireless communication channel signal receiving and transmitting unit which is in tandem with signal conversion control unit and information entry and display unit; and primary terminal contains wireless communication channel signal receiving and transmitting unit which is in tandem with signal conversion control unit which is connected to network terminal of primary terminal.

20. The system of communication of claim 19, wherein secondary terminal contains signal power modifying unit used for wireless transmitting which is connected to signal receiving and transmitting unit with wireless communication channel.

21. The system of communication of claim 19, wherein telephone network contains signal converting into compatible with general radio channel unit which is connected to control computer; and general radio channel radio transmitter; and secondary terminal contains additional general radio channel signal receiver which is in tandem with signal decoding and message forming unit which is connected to information entry and display control unit.
